# EUROPEAN PATENT SPECIFICATION

(11) **EP 4 221 342 B1**
(45) Date of publication and mention of the grant of the patent: **28.01.2026**
(21) Application number: 21871609.0
(22) Date of filing: 24.09.2021
(51) Int. Cl.: H04L 67/148, H04W 4/16, H04L 65/1094, H04L 65/80, H04L 67/141, H04L 67/145, H04L 67/146, H04W 36/00

(54) **SERVICE DATA TRANSMISSION METHODS AND APPARATUSES**
DIENSTDATENÜBERTRAGUNGSVERFAHREN UND -VORRICHTUNGEN
PROCÉDÉS ET APPAREILS DE TRANSMISSION DE DONNÉES DE SERVICE

(30) Priority: 25.09.2020 CN 202011028930
(43) Date of publication of application: 02.08.2023
(73) Proprietor: Vivo Mobile Communication Co., Ltd., Dongguan, Guangdong 523863 (CN)
(72) Inventor: KANG, Yanchao, Dongguan, Guangdong 523863 (CN)
(74) Representative: Lavoix
(86) International application number: PCT/CN2021/120380
(87) International publication number: WO 2022/063240

(56) References cited:
- EP-B1- 2 428 016
- WO-A2-2010/081146
- CN-A- 102 752 327
- CN-A- 103 079 241
- CN-A- 103 428 671
- CN-A- 107 911 422
- CN-A- 108 924 603

## Description

### TECHNICAL FIELD

Embodiments of the present invention relate to the communications field, and in particular, to service data transmission methods and apparatuses.

### BACKGROUND

At present, a service continuity solution provided in a 3GPP system is only for service continuity when a device is transferred on different network nodes, for example, service continuity when a network node changes triggered transfer due to mobility.

Currently, a user generally has a plurality of electronic devices, for example, when the user changes a used device in a process of watching a movie or listening to music, a service is played on a new device from the beginning, instead of starting from a breakpoint of the user on the previous device, which cannot ensure service continuity of an Internet service during transfer between a plurality of devices of a user.

WO 2010/081146A2 provides systems and methods for transferring a session or components of a session in a communication network. The components of the session include media flows and control over the media flows. The user can initiate a transfer of a existing session with a mobile device such as user equipment (UE) to one or more devices that may lead to fan-out or fan-in to multiple devices. In providing the capability to transfer these sessions, a gateway is used to implement network functions that allow the streaming to be controlled and delivered to the respective UEs.

EP 2428016B1 provides a method to transfer control. The method includes receiving a request to transfer control of a collaborative session from a first user equipment (UE). The method includes sending a request for the transfer of control of the collaborative session in response to the received request to a second UE, and receiving, in response to the sent request to the second UE, an indication of acceptance of the transfer of control of the collaborative session. The method includes sending a notification of status to the first UE of the control of the collaborative session in response to receiving, from the second UE, the indication of acceptance.

### SUMMARY

Embodiments of this application provide service data transmission methods and apparatuses to ensure service continuity of an Internet service during transfer between a plurality of devices of a user.

The invention is set out in the appended set of claims.

### BRIEF DESCRIPTION OF DRAWINGS

The accompanying drawings described herein are intended to provide a further understanding of the present invention, and constitute a part of the present invention. In the accompanying drawings:
FIG. 1 is a block diagram of a wireless communications system to which embodiments of this application can be applied;
FIG. 2 is a schematic flowchart of a service data transmission method according to an embodiment of the present invention;
FIG. 3 is a schematic flowchart of a service data transmission method according to another embodiment of the present invention;
FIG. 4 is a schematic flowchart of a service data transmission method according to another embodiment of the present invention;
FIG. 5 is a schematic flowchart of a service data transmission method according to another embodiment of the present invention;
FIG. 6 is a schematic flowchart of a service data transmission method according to another embodiment of the present invention;
FIG. 7 is a schematic structural diagram of a service data transmission apparatus according to an embodiment of the present invention;
FIG. 8 is a schematic structural diagram of a service data transmission apparatus according to an embodiment of the present invention;
FIG. 9 is a schematic structural diagram of a network device according to another embodiment of the present invention; and
FIG. 10 is a schematic structural diagram of a terminal device according to another embodiment of the present invention.

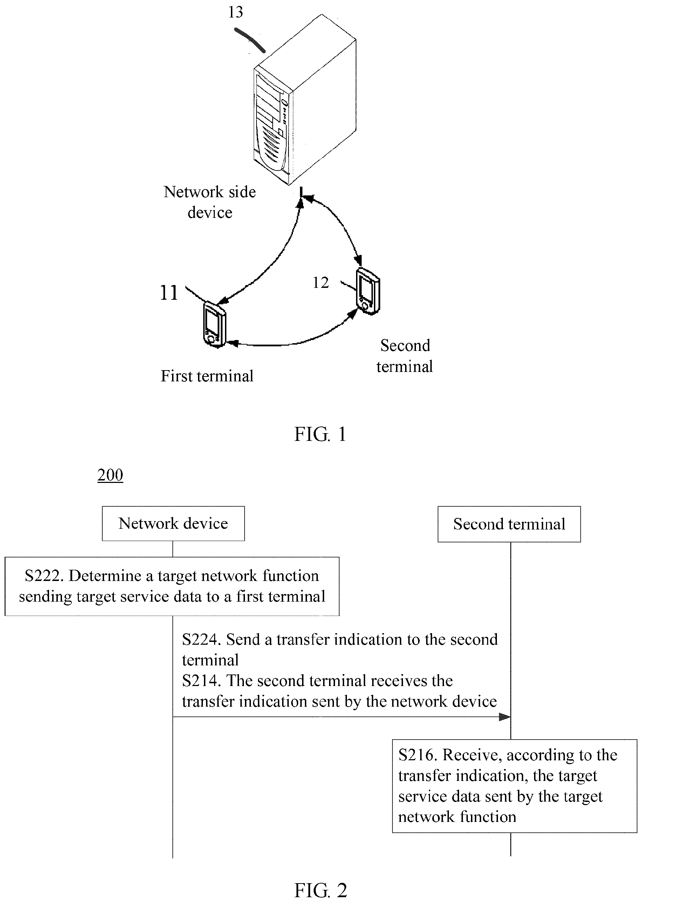

Figures 2-6, 10 and their description are not in accordance with all aspects of the invention as defined in the independent claims. They are therefore present for illustration purposes or to highlight specific aspects or features of the claims.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application.

In the specification and claims of this application, the terms "first", "second", and the like are intended to distinguish between similar objects but do not describe a specific order or sequence. It should be understood that the data used in such a way is interchangeable in proper circumstances so that the embodiments of this application can be implemented in an order other than the order illustrated or described herein. In addition, in the specification and the claims, "and/or" represents at least one of connected objects, and a character "/" generally represents an "or" relationship between associated objects.

It should be noted that, the technologies described in the embodiments of this application are not limited to a 5G communications system, and a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe the 5G communications system for example purposes, and 5G communications system terms are used in most of the following descriptions, although these technologies can also be applied to an application other than the 5G communications system, for example, a 6th generation (6th Generation, 6G) communications system.

FIG. 1 is a block diagram of a wireless communications system to which embodiments of this application can be applied. The wireless communications system includes a first terminal 11, a second terminal 12, and a network side device 13. The first terminal 11 and the second terminal 12 may also be referred to as a terminal device or user equipment (User Equipment, UE), and are hereinafter referred to as the first terminal 11 and the second terminal 12. The first terminal 11 and the second terminal 12 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 and the second terminal 12 is not limited in the embodiments of this application. The network side device 13 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited. The core network device may be an access and mobility management function (Access and Mobility Management Function, AMF), a session management function (Session Management Function, SMF), a user plane function (User Plane Function, UPF) in a 5G system, or a mobile management entity (Mobile Management Entity, MME), a signaling gateway (Signaling Gateway, SGW), a packet data network gateway (Packet Data Network Gateway, PDN GW) in an LTE system, or a core network device in 6G or another communications system.

With reference to the accompanying drawings, the service data transmission method provided in the embodiments of this application is described in detail by using specific embodiments and application scenarios.

As shown in FIG. 2, an embodiment of the present invention provides a service data transmission method 200. The method may be performed by a terminal device and/or a network device. In other words, the method may be performed by software or hardware installed on the terminal device and/or the network device. The method includes the following steps.

S222. A network device determines a target network function sending target service data to a first terminal.

For example, the network side device 13 in FIG. 1 sends the target service data to the first terminal by using the target network function before this step, and when a device that needs to receive the target service data is changed from the first terminal 11 to the second terminal 12, the target network function sending the target service data to the first terminal is determined in this step. For example, an identifier of the target network function serving a first connection may be determined by using related context information of the first connection between the first terminal and the network device.

S224. Send a transfer indication to a second terminal.

Therefore, so that the target network function sends the target service data to the second terminal, and so that the second terminal receives the target service data sent by the target network function. That is, the transfer indication is used to enable the target network function to send the target service data to the second terminal, or the transfer indication is used to enable the second terminal to receive the target service data sent by the target network function.

S214. The second terminal receives the transfer indication sent by the network device.

S216. The second terminal receives, according to the transfer indication, the target service data sent by the target network function.

The target network function is a network function sending service data to the first terminal. The target network function sending the target service data to the second terminal 12 and the target network function sending the target service data to the first terminal 11 are a same network function, thereby ensuring service continuity of an Internet service during transfer between a plurality of devices of a user.

Therefore, according to the service data transmission method provided in this embodiment of the present invention, a network device determines a target network function sending target service data to a first terminal, and a transfer indication is sent to a second terminal, so that the second terminal receives the target service data sent by the target network function. Before and after transfer of a receiving device, the same target network device sends the target data, thereby ensuring service continuity of an Internet service during transfer between a plurality of devices of a user.

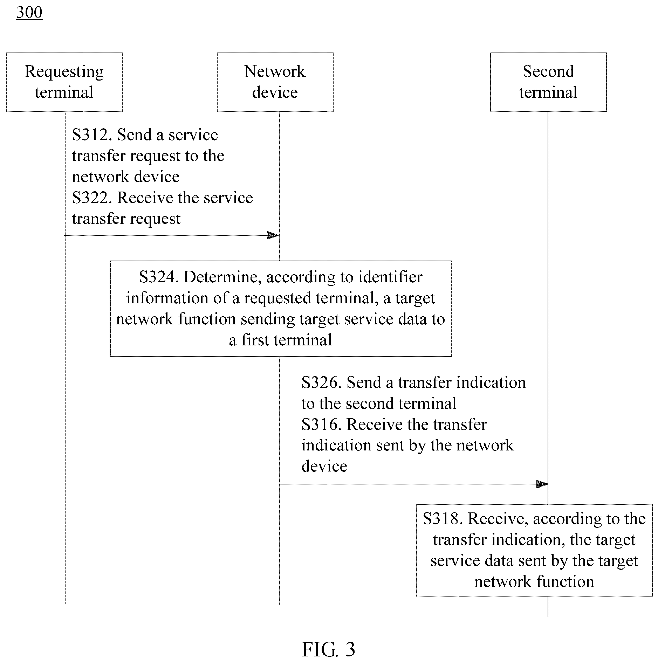

As shown in FIG. 3, an embodiment of the present invention provides a service data transmission method 300. The method may be performed by a terminal device, as claimed, and/or a network device, not according to the invention as claimed. In other words, the method may be performed by software or hardware installed on the terminal device and/or the network device. The method includes the following steps.

S312. A requesting terminal sends a service transfer request to a network device.

The service transfer request is used to request a network device (for example, the network side device 13 in FIG. 1) to change a device receiving target service data from a first terminal 11 to a second terminal 12. Although the requesting terminal and the second terminal in the figure are separately displayed, it does not mean that the second terminal cannot be used as the requesting terminal. Generally, the requesting terminal may be the first terminal 11, not according to the invention as claimed, or the second terminal 12, as claimed.

The service transfer request includes identifier information of a requested terminal, and the requested terminal is a terminal other than the requesting terminal in the first terminal 11 and the second terminal 12. In other words, in a case that the requesting terminal is the first terminal 11, the requested terminal is the second terminal 12. Otherwise, in a case that the requesting terminal is the second terminal 12, the requested terminal is the first terminal 11.

In an implementation, that the device receiving the target service data is changed from the first terminal 11 to the second terminal 12 may include: changing the device receiving the target service data to only the second terminal 12. That is, the device receiving the target service data is the first terminal 11 before the change, but the device receiving the target service data is only the second terminal 12 after the change, and the first terminal 11 no longer receives a target service.

In an implementation, that the device receiving the target service data is changed from the first terminal 11 to the second terminal 12 may include: changing the device receiving the target service data to the first terminal 11 and the second terminal 12. That is, the device receiving the target service data includes the first terminal 11 before the change, but the device receiving the target service data is the first terminal 11 and the second terminal 12 after the change.

In addition, as described above, for example, a network function in the network device may be a session management function in 3GPP, an MME in 4G, or an AMF and an SMF in 5G.

A request message sent by a terminal device to a network may be a session management message, may be a PDN connection request message (PDN CONNECTIVITY REQUEST message) or the like in 4G, or may be a PDU session establishment request message (PDU SESSION ESTABLISHMENT REQUEST message), a session establishment modification message (PDU SESSION MODIFICATION REQUEST message), a session establishment release message (PDU SESSION RELEASE REQUEST message), or the like in 5G. In 5G, the terminal device encapsulates the session management message into an ULNAS TRANSPORT message and sends the ULNAS TRANSPORT message to the AMF, and the AMF forwards the session management message to the SMF or the like.

S322. The network device receives the service transfer request sent by the requesting terminal.

Correspondingly to the foregoing step, in this step, the network device receives the service transfer request sent by the requesting terminal in the foregoing step.

S324. Determine, according to the identifier information of the requested terminal, the target network function sending the target service data to the first terminal.

The target network function sending the target service data to the second terminal 12 and the target network function sending the target service data to the first terminal 11 are a same network function, thereby ensuring service continuity of an Internet service during transfer between a plurality of devices of a user.

S326. Send a transfer indication to a second terminal.

In an implementation, in a case that a second connection is established between the second terminal and the network device, the transfer indication is a second connection modification message, and the second connection modification message is used to modify a second connection rule of the second connection, so that the second terminal receives the target service data sent by the target network function.

S316. The second terminal receives the transfer indication.

S318. The second terminal receives, according to the transfer indication, the target service data sent by the target network function.

The target network function is a network function sending service data to the first terminal.

Therefore, according to the service data transmission method provided in this embodiment of the present invention, a service transfer request sent by a requesting terminal is received, and a target network function sending target service data to a first terminal is determined according to identifier information of a requested terminal. The first terminal or a second terminal may serve as the requesting terminal to initiate the service transfer request, to implement transfer of a target service receiving device, thereby ensuring service continuity of an Internet service during transfer between a plurality of devices of a user after the transfer.

For example, it should be noted herein that before step S312, a first connection is established between the first terminal 11 and the network device. Therefore, the first terminal 11 can receive, by using the first connection, the target service data sent by the target network function, for example, the target service data is transmitted by using a first QoS flow on the first connection. This example is an example based on the second connection established between the second terminal 12 and the network device, that is, step S312 is performed only in a case that the second connection is established between the second terminal 12 and the network device. A case that no second connection is established between the second terminal 12 and the network device is described in the following embodiment.

In a first example, not according to the invention as claimed, the first terminal 11 may serve as the requesting terminal to send the service transfer request to the network device in S312, to request the network device to change a device receiving the target service data from the first terminal 11 to the first terminal 11 and the second terminal 12.

In S322, the network device receives the service transfer request sent by the first terminal 11. The target network function sending the target service data to the first terminal 11 is determined according to the identifier information of the second terminal 12 in S324, and the network device sends the transfer indication to the second terminal 12 in S326. The second terminal 12 receives the transfer indication, and receives, according to the transfer indication in S318, the target service data sent by the target network function. In addition, the network device may further send a service transfer response message, such as an acknowledgment (ACK) message, to the first terminal 11. The first terminal 11 receives the service transfer response message sent by the network device, that is, receives the ACK message.

In a second example, not according to the invention as claimed, the second terminal 12 may serve as the requesting terminal to send the service transfer request to the network device in S312, to request the network device to change a device receiving the target service data from the first terminal 11 to the first terminal 11 and the second terminal 12.

In S322, the network device receives the service transfer request sent by the second terminal 12. The target network function sending the target service data to the first terminal 11 is determined according to identifier information of the first terminal 11 in S324, and the network device sends a transfer response message to the second terminal 12 in S326. The transfer indication is included in the transfer response message, and the transfer indication is a second connection modification message, where the second connection modification message is used to modify a second connection rule of the second connection, so that the second terminal receives the target service data sent by the target network function. The second terminal receives the transfer indication in S316.The second terminal receives, according to the transfer indication in S318, the target service data sent by the target network function.

In a third example, according to the invention as claimed, the second terminal 12 serves as the requesting terminal to send the service transfer request to the network device in S312, to request the network device to change a device receiving the target service data from the first terminal 11 to only the second terminal 12.

Based on the second example, and not being according to the invention as claimed, this example further includes: sending a first connection release message to the first terminal, where the first connection release message is used to release a first connection between the first terminal and the network device, so that the first terminal 11 no longer receives the target service data, and the device receiving the target service data is changed from the first terminal 11 to the only second terminal 12.

Alternatively, and not being according to the invention as claimed, based on the second example, this example further includes: sending a first connection modification message to the first terminal, where the first connection modification message is used to modify a first connection rule of the first connection, to stop the target network function from sending data to the first terminal, so that the device receiving the target service data is changed from the first terminal 11 to the only second terminal 12.

According to the service data transmission method provided in this embodiment of the present invention, not being according to the invention as claimed, based on a second connection established between a second terminal and a network device, a first terminal may serve as a requesting terminal to initiate a service transfer request, to implement transfer of a target service receiving device, thereby ensuring service continuity of an Internet service during transfer between a plurality of devices of a user after the transfer.

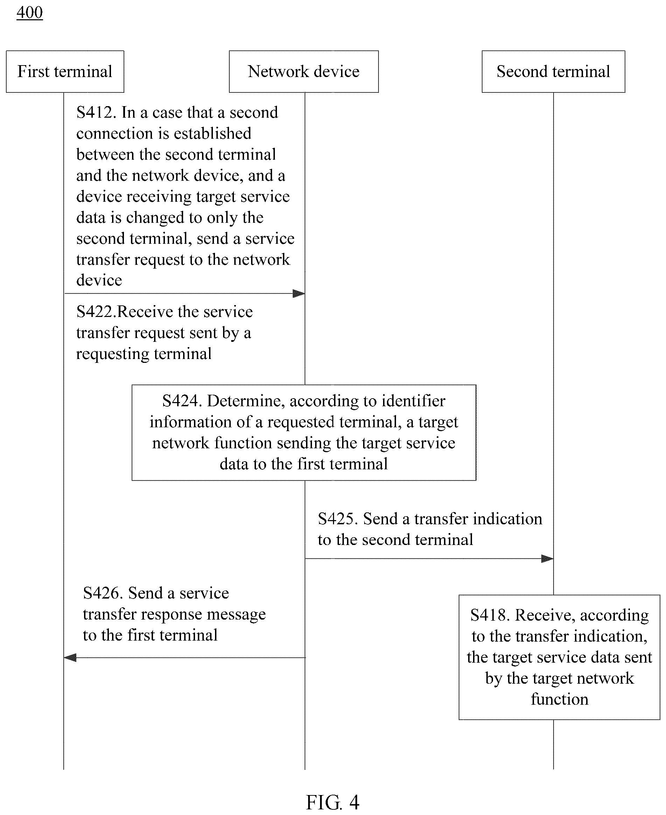

As shown in FIG. 4, an embodiment of the present invention provides a service data transmission method 400. The method may be performed by a terminal device and/or a network device. In other words, the method may be performed by software or hardware installed on the terminal device and/or the network device. The method includes the following steps.

S412. In a case that a second connection is established between a second terminal and a network device, and a device receiving target service data is changed to only the second terminal, a first terminal sends a service transfer request to the network device.

For this step, refer to the descriptions of step S212 in the embodiment in FIG. 2. Details are not described herein again. Specifically, before this step, a first connection is established between the first terminal 11 and the network device, so that the first terminal 11 can receive, by using the first connection, the target service data sent by the network device. In addition, the second terminal 12 has established the second connection to the network device for transmitting service data. In this step, the service transfer request is used to indicate that the device receiving the target service data is changed from the first terminal 11 to only the second terminal 12.

In this case, in an implementation, the service transfer request may be a first connection release request, which is used to request the network device to release the first connection to stop sending of the target service data between the target network function and the first terminal 11, so that the device receiving the target service data is changed from the first terminal 11 to only the second terminal 12.

In another implementation, the service transfer request may be a first connection modification request, which is used to request the network device to modify a first connection rule of the first connection to stop sending of the target service data between the target network function and the first terminal 11, so that the device receiving the target service data is changed from the first terminal 11 to only the second terminal 12.

In an implementation, the identifier information of the requested terminal includes at least one of the following identifiers: an identifier of the requested terminal, an identifier of a connection between the requested terminal and the network device, and a flow identifier.

Specifically, the target service data may be represented by an identifier of an evolved packet system (Evolved Packet System, EPS) bearer for transmitting the service data or a quality of service (Quality of Service, QoS) flow identifier. For example, the identifier information of the requested terminal includes an identifier of the first terminal 11, a session identifier, and a flow identifier.

The bearer may be a bearer on a PDN connection in 4G. The identifier information of the requested terminal in 4G may include a device identifier +linked EPS bear ID+EPS bearer ID, where the linked EPS bear ID is optionally carried.

The bearer may be a QoS flow (flow) on a protocol data unit (Protocol Data Unit, PDU) session in 5G. The identifier information of the requested terminal in 5G may include a device identifier +PDU session ID+ QoS flow identifier.

Optionally, the device identifier may be a permanent identifier of the device 1, or may be a temporary identifier allocated by the network to the device 1.

Optionally, to ensure that only the target service data is transmitted on the bearer, before initiating transfer, the first terminal 11 may ensure, through a bearer modification process, that only the target service data is transmitted on the bearer.

S422. The network device receives the service transfer request sent by the requesting terminal.

For this step, refer to the descriptions of step S222 in the embodiment in FIG. 2. Repeated content is not described herein again.

S424. Determine, according to the identifier information of the requested terminal, the target network function sending the target service data to the first terminal.

For example, a terminal context is searched based on an identifier of the requesting terminal carried in the identifier information of the requesting terminal, and a context of the connection is located according to a connection identifier carried in the identifier information of the requesting terminal. The context includes an identifier of the target network function sending the target service data to the first terminal, where the target network function includes at least one of a packet data network gateway (Packet Data Network Gateway, PDN GW), a session management function (Session Management Function, SMF), and a user plane function (User Plane Function, UPF). In this step, the requesting terminal is the first terminal 11, and the first connection is established between the first terminal 11 and the network device. Therefore, the network device may also determine the target network function sending the target service data to the first terminal.

S425. The network device sends a transfer indication to the second terminal.

The transfer indication is a second connection modification message, and the second connection modification message is used to modify a second connection rule of the second connection, so that the target network function sends the target service data to the first terminal 12. Therefore, the device receiving the target service data is changed from the first terminal 11 to the second terminal 12 by using the target network function according to the service transfer request.

S426. The network device sends a service transfer response message to the first terminal.

In an implementation, in a case that the service transfer request is a first connection release request, the service transfer response message is a first connection release message, and the first connection release message is used to release a first connection between the first terminal 11 and the network device, to stop sending the target service data between the target network function and the first terminal 11.

In another implementation, in a case that the service transfer request is a first connection modification request, the service transfer response message is a first connection modification command, and the first connection modification command is used to modify a first connection rule of the first connection, to stop sending the target service data between the target network function and the first terminal 11.

Correspondingly, the first terminal receives the service transfer response message sent by the network device.

S418. The second terminal receives, according to the transfer indication, the target service data sent by the target network function.

The target network function is a network function sending service data to the first terminal.

According to the service data transmission method provided in this embodiment of the present invention, in a case that a second connection is established between a second terminal and a network device, a device receiving target service data is changed to only a second terminal, and a first terminal may send a service transfer request to the network device, thereby ensuring service continuity of an Internet service during transfer between a plurality of devices of a user.

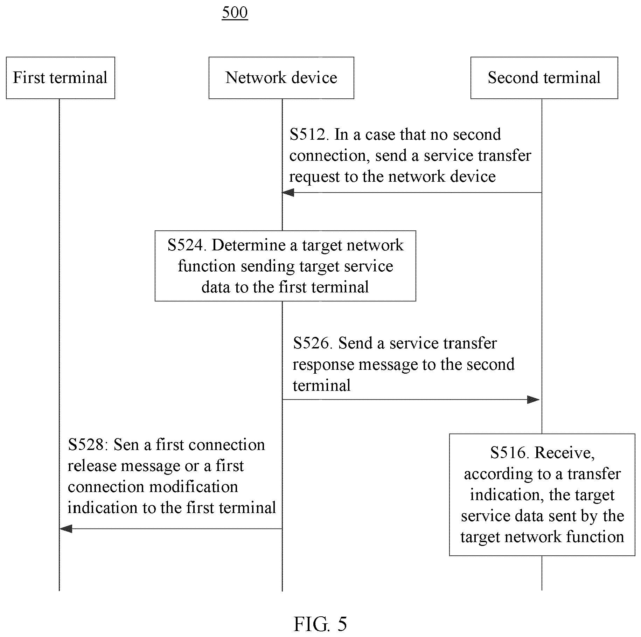

As shown in FIG. 5, an embodiment of the present invention provides a service data transmission method 500. The method may be performed by a terminal device, as claimed, and/or a network device, not according to the invention as claimed. In other words, the method may be performed by software or hardware installed on the terminal device and/or the network device. The method includes the following steps.

S512. In a case that no second connection is established between a second terminal and a network device, the second terminal sends a service transfer request to the network device.

For this step, refer to the descriptions of step S222 in the embodiment in FIG. 2 or step S422 in the embodiment in FIG. 4. Repeated content is not described herein again.

According to the communications protocol, a connection request needs to be made by a device, so that a network can establish a connection to the device, and data can be transmitted after the connection is established. Therefore, before this step, in a case that no second connection is established between the second terminal 12 and the network device, the requesting terminal can only be the second terminal 12, that is, the second terminal 12 can simultaneously establish a second connection to the network device when initiating a transfer request.

In an implementation, the service transfer request further includes at least one of the following content: a data network name corresponding to a first connection obtained from the first terminal 11, a slice corresponding to the first connection, and a mapped slice identifier corresponding to the first connection.

The network device receives the service transfer request sent by the second terminal.

S524. The network device determines, according to the identifier information of the requested terminal, the target network function sending the target service data to the first terminal.

This step may include the same description as step S424 in the embodiment in FIG. 4. Repeated content is not described again.

An access and mobility management function (Access and Mobility Management Function, AMF) determines, based on an identifier of the first terminal 11 and an identifier of the first connection, for example, a PDU session identifier, an identifier of an SMF managing the first connection, and selects a same SMF for the device 2 to establish the second connection. In a context of the first terminal, the SMF determines, based on the identifier of the first connection, an identifier of a UPF serving the first connection, and selects a same UPF for the device 2 to serve the second connection for the second terminal 12.

In addition, after the target network function is determined, in this step, a target parameter may be sent to the target network function. For example, the SMF determines the target parameter and sends the target parameter to the UPF, where the target parameter includes the identifier of the second terminal 12, an identifier of the second connection, a second flow identifier, an IP address and a port number that are allocated by a network to the second terminal 12, a first target routing rule, and a second target routing rule.

The first target routing rule is a routing rule before transfer, and includes a first packet filter and a first downlink routing rule, a source IP address/source port number in an IP 5-tuple in the first packet filter is a target service server IP address/port number, a target IP address/target port number is an IP address/port number of the first device, and the first downlink routing rule includes at least one of an identifier of the first device, an identifier of the first connection, and a first flow identifier. The second target routing rule includes a second packet filter and a second downlink routing rule, a source IP address/source port number in an IP 5-tuple in the second packet filter is a target service server IP address/port number, a target IP address/target port number is an IP address/port number of the first device, and the second downlink routing rule includes at least one of an identifier of the second device, an identifier of the second connection, and a second flow identifier. When receiving is performed only on the second device after the transfer, the second downlink routing rule includes the identifier of the second device, the identifier of the second connection, and the second flow identifier; or when receiving is performed on both the first device and the second device after the transfer, the second downlink routing rule includes the identifier of the first device, the identifier of the first connection, the first flow identifier, the identifier of the second device, the identifier of the second connection, and the second flow identifier.

S526. The network device sends a service transfer response message to the second terminal.

The second terminal receives the service transfer response message sent by the network device.

The service transfer response message carries the transfer indication. In an implementation, the service transfer response message includes a second connection establishment message, and the second connection establishment message is used to establish a second connection between the second terminal and the target network function, that is, includes a second connection rule of the second connection. The target network function is a network function sending the target service data to the first terminal 11.

No second connection is established between the second terminal and the network device before S512. Therefore, the service transfer response message includes the second connection rule of the second connection, and the second connection can be established between the second terminal and the network device. In addition, a network function sending service data to the second terminal 12 by using the second connection and a network function sending the target service data to the first terminal 11 before S512 are a same network function. The second packet in the foregoing target routing rule can identify a target service data packet that is previously sent to the first device, and the downlink routing rule in the second routing rule ensures that the target service packet is sent to a second link (optionally, the second QoS flow) of the second device, or to both a first link (optionally, the first QoS flow) of the first device and a second link (optionally, the second QoS flow) of the second device, thereby ensuring service continuity of an Internet service during transfer between a plurality of devices of a user.

In an implementation, in a case that a device receiving the target service data is changed from the first terminal 11 to the first terminal 11 and the second terminal 12, the service transfer response message sent by the network device to the requesting terminal includes the second connection rule of the second connection, and the first terminal 11 also keeps receiving the target service data after the change. Therefore, a state of the first connection does not need to change, that is, the first connection does not need to be released or modified.

S516. The second terminal receives, according to the transfer indication, the target service data sent by the target network function.

In another implementation, in a case that the device receiving the target service data is changed to only the second terminal 12, the method further includes:
S528. The network device sends a first connection release message or a first connection modification message to the first terminal 11.

The first connection release message is used to release a first connection between the first terminal 11 and the network device. The first connection modification message is used to modify a first connection rule of the first connection, to stop the target network function from sending data to the first terminal 12. Therefore, sending of the target service data between the target network function and the first terminal 11 is stopped, so that the device receiving the target service data is changed from the first terminal 11 to only the second terminal 12.

According to the service data transmission method provided in this embodiment of the present invention, a service transfer request is sent to a network device, where the service transfer request is used to change a device receiving target service data from a first terminal 11 to a second terminal 12, the service transfer request includes identifier information of a requested terminal, and the requested terminal is a terminal other than a requesting terminal in the first terminal 11 and the second terminal 12; and a service transfer response message sent by the network device is received. In this way, service continuity of an Internet service during transfer between a plurality of devices of a user can be ensured.

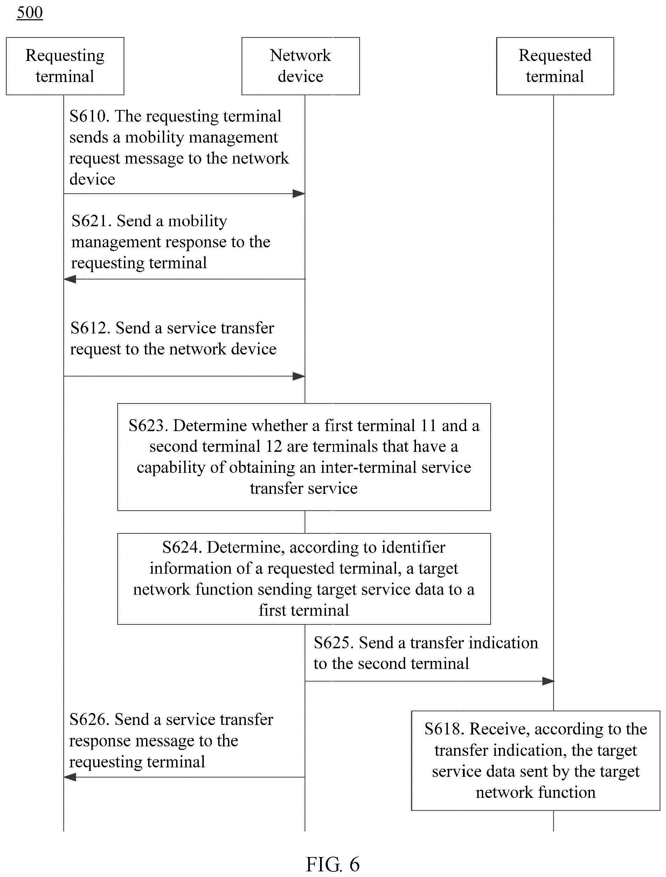

As shown in FIG. 6, an embodiment of the present invention provides a service data transmission method 600. The method may be performed by a terminal device and/or a network device. In other words, the method may be performed by software or hardware installed on the terminal device and/or the network device. The method includes the following steps.

S610. A requesting terminal sends a mobility management request message to a network device.

Requesting authorization from a network may include: sending the mobility management request message to the network device, where the mobility management request message includes a first indication identifier used to request to obtain an inter-terminal service transfer service and/or a second indication identifier used to represent that an inter-terminal service transfer service capability is supported, so that the requesting terminal obtains an inter-terminal service transfer service capability. The requesting terminal may be a first terminal 11 or a second terminal 12. That is, the first terminal 11 and the second terminal 12 may separately send mobility management request messages to the network device, to obtain respective inter-terminal service transfer service capabilities.

In an implementation, the mobility management request message further includes a terminal identifier of the requested terminal.

The network device receives the mobility management request message sent by the requesting terminal.

S621. The network device sends a mobility management response to the requesting terminal.

The requesting terminal receives the mobility management response sent by the network. The mobility management response includes network signaling used to represent that the network allows the requesting terminal to obtain an inter-terminal service transfer service capability. Both the first terminal 11 and the second terminal 12 need to request authorization from the network, to obtain an inter-terminal service transfer service. Therefore, the first terminal 11 and the second terminal 12 are terminals that have a capability of obtaining an inter-terminal service transfer service, and the following steps are performed on this basis.

For example, in a mobility management process, the first terminal 11 requests an inter UE transfer (inter UE transfer) service from the network or indicates that an inter UE transfer capability is supported. In a response message, the network accepts the inter UE transfer service request requested by the first terminal 11 or indicates that the network supports the inter UE transfer capability, and provides a token (token) for the first terminal 11. The first terminal 11 provides the token for the second terminal 12. In a mobility management process, the second terminal 12 provides the token obtained from the first terminal 11 for the network. The network device determines, by determining that the token is a token previously provided by the network for the first terminal 11, that the first terminal 11 and the second terminal 12 are terminals that have a capability of obtaining an inter-terminal service transfer service, and associates contexts of the two devices, to provide an inter UE transfer service for the two devices.

In addition, the determining whether the inter UE transfer service can be provided for the two devices may also include another implementations.

For example, the first terminal 11 provides an identifier of the second terminal 12 and a specific indication for the network device in the mobility management process, for example, the foregoing inter UE transfer-related indication (requesting an inter UE transfer (inter UE transfer) service or indicating that an inter UE transfer capability is supported), where the indication indicates that the second terminal 12 is a trusted terminal of the first terminal 11, and the device 2 may obtain the inter UE transfer service together with the first terminal 11. The second terminal 12 provides an identifier of the first terminal 11 and a specific indication for the network device in the mobility management process, for example, the foregoing inter UE transfer-related indication (requesting an inter UE transfer (inter UE transfer) service or indicating that an inter UE transfer capability is supported), where the indication indicates that the first terminal 11 is a trusted terminal of the second terminal 12, and the second terminal 12 may obtain the inter UE transfer service together with the first terminal 11. The network device records, in the contexts of the first terminal 11 and the second terminal 12, the identifier of the trusted device and the inter UE transfer-related indication, to associate the contexts of the two devices.

For example, the first terminal 11 and the second terminal 12 belong to a same user. In respective subscriptions of the devices, it is indicated that the devices belong to a same user, and an inter UE transfer service may be performed. When another network device obtains a related subscription from a subscription data management function entity, it may be determined that the first terminal 11 and the second terminal 12 are mutually trusted terminals, and the contexts of the two devices are associated, to provide an inter UE transfer service for the two devices.

For example, the device 1 and the device 2 transmit various pieces of identifier information through, for example, wireless fidelity (Wi-Fi), Bluetooth, and wireless communication. The identifier information includes but is not limited to an identifier of the first terminal 11, an identifier PDU session identifier of a first connection, a QoS flow identifier, an APN, a data network name (Data Network Name, DNN), a slice (slice), a mapped slice (mapped slice) identifier, and a token.

In addition, the network device may also send a network capability indication to the requesting terminal, where the network capability indication is used to indicate whether the network device supports an inter-terminal service transfer service capability.

S612. The requesting terminal sends a service transfer request to the network device.

For this step, refer to the descriptions of steps S212 to S512 in the embodiments in FIG. 2 to FIG. 5. Details are not described herein again.

In an implementation, the service transfer request further includes an inter-terminal transfer indication, and the inter-terminal transfer indication is used to represent that a terminal requests to transfer target service data between the first terminal 11 and the second terminal 12.

For example, the service transfer request sent by the second terminal 12 is a PDU SESSION ESTABLISHMENT REQUEST message, and the message is encapsulated in a container in an uplink non-access stratum (Non-Access Stratum, NAS) transmission message to be sent to an access and mobility management function (Access and Mobility Management Function, AMF). The uplink NAS transmission message further includes at least one of the following indications.
i. Identifier of the first terminal 11, identifier PDU session ID of the first connection, and QoS flow identifier.
ii. Inter UE transfer indication, where the indication indicates that a second connection requested by the second terminal 12 is used for a data connection of inter UE transfer.
iii. DNN, which may be a DNN obtained from the first terminal 11.
iv. Slice, which may be a slice obtained from the second terminal 12.
v. Mapped slice, which may be a mapped slice identifier obtained from the first terminal 11.

The network device receives the service transfer request sent by the requesting terminal.

S623. Determine whether the first terminal 11 and the second terminal 12 are terminals that have a capability of obtaining an inter-terminal service transfer service.

This step may include: determining, by using contexts of the first terminal and the second terminal locally stored in the network device and according to the inter-terminal transfer indication carried in the service transfer request, whether the first terminal 11 and the second terminal 12 are terminals that have a capability of obtaining an inter-terminal service transfer service, and step S624 is performed in a case that it is determined that the first terminal 11 and the second terminal 12 are terminals that have a capability of obtaining an inter-terminal service transfer service.

For example, after receiving the inter UE transfer indication, the AMF determines whether the device 1 has an association relationship with the device 2 and whether an inter UE transfer service may be performed. A determining method may be determining that the contexts of the local first device and the second device includes the inter UE transfer indication and/or an identifier of a peer device, or learning, by querying a UDM subscription server, that the two devices may perform an inter UE transfer service.

S624. The network device determines a target network function sending target service data to a first terminal.

For this step, refer to the descriptions in step S224, 324, or 424 in the embodiments in FIG. 2 to FIG. 4. Details are not described herein again.

For example, the AMF performs SMF selection. For example, based on the identifier of the first terminal 11 and the identifier PDU session ID of the first connection that are provided by the second terminal 12, an SMF identifier identified in a PDU session routing context of a first connection in a context of the first terminal 11 is selected for the second terminal 12, to establish a second connection for the second terminal 12.

The message sent by the AMF to the SMF includes at least one of the following parameters.
i. Identifier of the first terminal 11, identifier PDU session ID of the first connection, and QoS flow identifier.
ii. Inter UE transfer indication, where the indication indicates that a second connection requested by the second terminal 12 is used for a data connection of inter UE transfer.
iii. DNN, which may be a DNN obtained from the first terminal 11.
iv. Slice, which may be a slice obtained from the second terminal 12.
v. Mapped slice, which may be a mapped slice identifier obtained from the first terminal 11.

The SMF selects, for the second terminal 12 based on the identifier of the first terminal 11 and the identifier of the first connection received from the AMF, a UPF ID identified in a context of the first connection in the context of the first terminal 11, to determine a UPF served by the second connection of the second terminal 12.

The message of the second connection sent by the session management device to the UPF includes a data routing rule, and the rule includes at least one of the following parameters.
i. Device identifier, which may be an identifier of the device 2.
ii. Data connection identifier, which may be an identifier of a data connection 2 of the device 2.
iii. Destination IP address and destination port number in a downlink data flow, which may be an IP address and a port number that are allocated by the network to the device 2.
iv. Source IP address and source port number in an uplink data flow, which may be an IP address and a port number that are allocated by the network to the device 2.

S625. Send a transfer indication to the second device.

S618. Receive, according to the transfer indication, the target service data sent by the target network function.

For this step, refer to the descriptions of steps S425 and S418 in the embodiment shown in FIG. 4.

S626. Send a service transfer response message to the requesting terminal.

The service transfer response message may include at least one of the following parameters.
i. Device identifier, which may be an identifier of the device 2.
ii. Data connection identifier, which may be an identifier of a data connection 2 of the device 2.
iii. Destination IP address and destination port number in a downlink data flow, which may be an IP address and a port number that are allocated by the network to the device 2.
iv. Source IP address and source port number in an uplink data flow, which may be an IP address and a port number that are allocated by the network to the device 2.

The requesting terminal receives the service transfer response message sent by the network device.

For the foregoing steps, refer to the descriptions of corresponding steps in the embodiments in FIG. 2 to FIG. 4. Details are not described herein again. In addition, it can be understood that interaction between the network device and the terminal device described on the network device side is the same as or correspond to that described on the terminal device side. To avoid repetition, related descriptions are appropriately omitted.

According to the service data transmission method provided in this embodiment of the present invention, a service transfer request is sent to a network device, where the service transfer request is used to change a device receiving target service data from a first terminal 11 to a second terminal 12, the service transfer request includes identifier information of a requested terminal, and the requested terminal is a terminal other than a requesting terminal in the first terminal 11 and the second terminal 12; and a service transfer response message sent by the network device is received. In this way, service continuity of an Internet service during transfer between a plurality of devices of a user can be ensured.

For the embodiments in FIG. 2 to FIG. 6, it can be understood that interaction between a network device and a terminal device described on the network device side is the same as or similar to that described on the terminal device side. To avoid repetition, related descriptions are appropriately omitted.

It should be noted that the service data transmission method provided in the embodiments of this application may be performed by a service data transmission apparatus, or a control module that is in the apparatus and that is configured to perform the foregoing method. In the embodiments of this application, that the service data transmission apparatus performs and loads the service data transmission method is used as an example to describe the service data transmission method provided in the embodiments of this application.

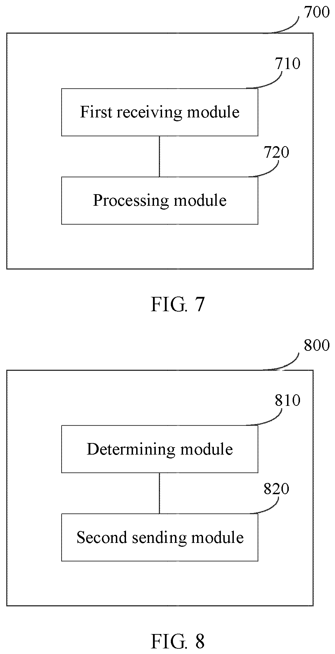

FIG. 7 is a schematic structural diagram of a service data transmission apparatus according to an embodiment of the present invention. As shown in FIG. 7, a service data transmission apparatus 700 includes a first receiving module 710 and a processing module 720.

The first receiving module 710 is configured to receive a transfer indication sent by a network device. The processing module 720 is configured to process, according to the transfer indication, target service data sent by a target network function, where the target network function is a network function sending service data to a first terminal.

In an implementation, the apparatus further includes: a first sending module, configured to send a service transfer request to the network device before receiving the transfer indication sent by the network device, where the service transfer request is used to request that a device receiving the target service data is changed from the first terminal to the second terminal, and the service transfer request includes identifier information of the first terminal; and the first receiving module 710 is further configured to receive a service transfer response message sent by the network device, where the transfer indication is included in the service transfer response message, or the transfer indication is the service transfer response message.

In an implementation, the service transfer request further includes an inter-terminal transfer indication, and the inter-terminal transfer indication is used to represent that a terminal requests to transfer the target service data between the first terminal and the second terminal.

In an implementation, in a case that a second connection is established between the second terminal and the network device, the transfer indication is a second connection modification message, and the second connection modification message is used to modify a second connection rule of the second connection, so that the second terminal receives the target service data sent by the target network function; and in a case that no second connection is established between the second terminal and the network device, the transfer indication is a second connection establishment message, and the second connection establishment message is used to establish a second connection between the second terminal and the target network function.

In an implementation, the service transfer request further includes at least one of the following content: a data network name corresponding to a first connection obtained from the first terminal, a slice corresponding to the first connection obtained from the first terminal, and a mapped slice identifier corresponding to the first connection obtained from the first terminal.

In an implementation, identifier information of the first terminal includes at least one of the following identifiers: an identifier of the first terminal, a connection identifier of a first connection, and a flow identifier, where the first connection is a connection between the first terminal and the network device.

In an implementation, the service transfer request further includes a transfer type identifier, and the transfer type identifier is used to represent that a device receiving the target service data is changed to the second terminal or is changed to the first terminal and the second terminal.

In an implementation, the first terminal and the second terminal are terminals that have a capability of obtaining an inter-terminal service transfer service.

In an implementation, the apparatus further includes: a first authorization module, configured to request authorization from a network before sending the service transfer request to the network device, so that the first terminal and the second terminal obtain an inter-terminal service transfer service capability.

In an implementation, the first authorization module is configured to: send a mobility management request message to the network device, where the mobility management request message includes a first indication identifier used to request to obtain an inter-terminal service transfer service and/or a second indication identifier used to represent that an inter-terminal service transfer service capability is supported; and receive a mobility management response sent by the network, where the mobility management response includes network signaling used to represent that the network allows the second terminal to obtain an inter-terminal service transfer service capability.

In an implementation, the mobility management request message further includes a terminal identifier of the first terminal.

In an implementation, the first receiving module 710 is further configured to receive a network capability indication sent by the network device before sending the service transfer request to the network device, where the network capability indication is used to indicate that the network device supports an inter-terminal service transfer service capability.

The apparatus 700 in this embodiment of the present invention may correspond to the procedures of the second terminal in the methods 200 to 600 in the embodiments of the present invention, and the units/modules in the apparatus 700 and the foregoing operations and/or functions are respectively for implementing the corresponding procedures of the second terminal in the methods 200 to 600. For brevity, details are not described herein again.

FIG. 8 is a schematic structural diagram of a service data transmission apparatus according to an embodiment of the present invention. As shown in FIG. 8, a service data transmission apparatus 800 includes a determining module 810 and a second sending module 820.

The determining module 810 is configured to determine a target network function sending target service data to a first terminal. The second sending module 820 is configured to send a transfer indication to a second terminal, where the transfer indication is used by the second terminal to receive the target service data sent by the target network function.

In an implementation, the apparatus further includes a second receiving module, configured to receive a service transfer request sent by a requesting terminal, where the service transfer request includes identifier information of a requested terminal, and the requested terminal is a terminal other than the requesting terminal in the first terminal and the second terminal; and the determining module 810 is configured to determine, according to the identifier information of the requested terminal, the target network function sending the target service data to the first terminal.

In an implementation, the second sending module 820 is further configured to: after the target network function sending the target service data to the first terminal is determined, send the target service data to the second terminal by using the target network function, where the target network function includes at least one of a PDN GW, an SMF, and a UPF.

In an implementation, the service transfer request further includes an inter-terminal transfer indication, and the inter-terminal transfer indication is used to represent that a terminal requests to transfer the target service data between the first terminal and the second terminal.

In an implementation, the second sending module 820 is further configured to: send the target service data to a second connection based on the inter-terminal transfer indication by using the target network function; or send the target service data to a first connection and a second connection based on the inter-terminal transfer indication by using the target network function, where the first connection is a connection between the first terminal and the target network function, and the second connection is a connection between the second device and the target network function.

In an implementation, in a case that a second connection is established between the second terminal and the network device, the transfer indication is a second connection modification message, and the second connection modification message is used to modify a second connection rule of the second connection, so that the second terminal receives the target service data sent by the target network function; in a case that no second connection is established between the second terminal and the network device, the transfer indication is a second connection establishment message, and the second connection establishment message is used to establish a second connection between the second terminal and the target network function; and in a case that a requesting terminal is the second terminal, the transfer indication is included in a service transfer response message sent to the second terminal, or the transfer indication is a service transfer response message sent to the second terminal.

In an implementation, the second sending module 820 is further configured to: send a first connection release message to the first terminal in a case that a device receiving the target service data is changed to only the second terminal, where the first connection release message is used to release a first connection between the first terminal and the network device; or send a first connection modification message to the first terminal in a case that a device receiving the target service data is changed to only the second terminal, where the first connection modification message is used to modify a first connection rule of the first connection, to stop the target network function from sending data to the first terminal.

In an implementation, in a case that a requesting terminal is the first terminal, the first connection release message or the first connection modification message is a service transfer response message sent to the first terminal.

In an implementation, the service transfer request further includes at least one of the following content: a data network name corresponding to a first connection obtained from the first terminal, a slice corresponding to the first connection obtained from the first terminal, and a mapped slice identifier corresponding to the first connection obtained from the first terminal.

In an implementation, the second sending module 820 is further configured to send a target parameter to the target network function after the target network function is determined, where the target parameter includes at least one of the following parameters: an identifier of the second terminal, an identifier of a second connection, a second flow identifier, an IP address and a port number that are allocated by a network to the second terminal, a first target routing rule, and a second target routing rule, where the first target routing rule includes a first packet filter and a first downlink routing rule, and the first downlink routing rule includes at least one of a first device identifier, an identifier of a first connection, and a first flow identifier; and the second target routing rule includes a second packet filter and a second downlink routing rule, and the second downlink routing rule includes at least one of a second device identifier, an identifier of a second connection, and a second flow identifier.

In an implementation, the identifier information of the requested terminal includes at least one of the following identifiers: an identifier of the requested terminal, a connection identifier, and a flow identifier, where the connection identifier is an identifier of a connection between the requested terminal and the network device.

In an implementation, the service transfer request further includes a transfer type identifier, and the transfer type identifier is used to represent that a device receiving the target service data is changed to the second terminal or is changed to the first terminal and the second terminal.

In an implementation, the apparatus further includes: a second authorization module, configured to: before the service transfer request sent by the requesting terminal is received, determine whether the first terminal and the second terminal are terminals that have a capability of obtaining an inter-terminal service transfer service.

In an implementation, before the determining whether the first terminal and the second terminal are terminals that have a capability of obtaining an inter-terminal service transfer service, the second authorization module is further configured to: receive a mobility management request message sent by the requesting terminal, where the mobility management request message includes a first indication identifier used to request to obtain an inter-terminal service transfer service and/or a second indication identifier used to represent that an inter-terminal service transfer service capability is supported; and send a mobility management response to the requesting terminal, where the mobility management response includes: network signaling used to represent that a network allows the requesting terminal to obtain an inter-terminal service transfer service capability.

In an implementation, the mobility management request message further includes a terminal identifier of the requested terminal.

In an implementation, the second sending module 820 is further configured to send a network capability indication to the requesting terminal before the service transfer request sent by the requesting terminal is received, where the network capability indication is used to indicate whether the network device supports an inter-terminal service transfer service capability.

In an implementation, the second authorization module is configured to: in a case that it is determined that the first terminal and the second terminal are terminals that have a capability of obtaining an inter-terminal service transfer service, change, according to the service transfer request, the device receiving the target service data from the first terminal to the second terminal.

The service data transmission apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle electronic terminal, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), an automated teller machine, or a self-service machine. This is not specifically limited in this embodiment of this application.

The service data transmission apparatus in this embodiment of this application may be an apparatus with an operating system. The operating system may be an Android (Android) operating system, an iOS operating system, or another possible operating system. This is not specifically limited in this embodiment of this application.

The apparatus 800 in this embodiment of the present invention may correspond to the procedures of the network device in the methods 200 to 600 in the embodiments of the present invention, and the units/modules in the apparatus 800 and the foregoing operations and/or functions are respectively for implementing the procedures of the network device in the methods 200 to 600 and a same or similar technical effect can be achieved. For brevity, details are not described herein again.

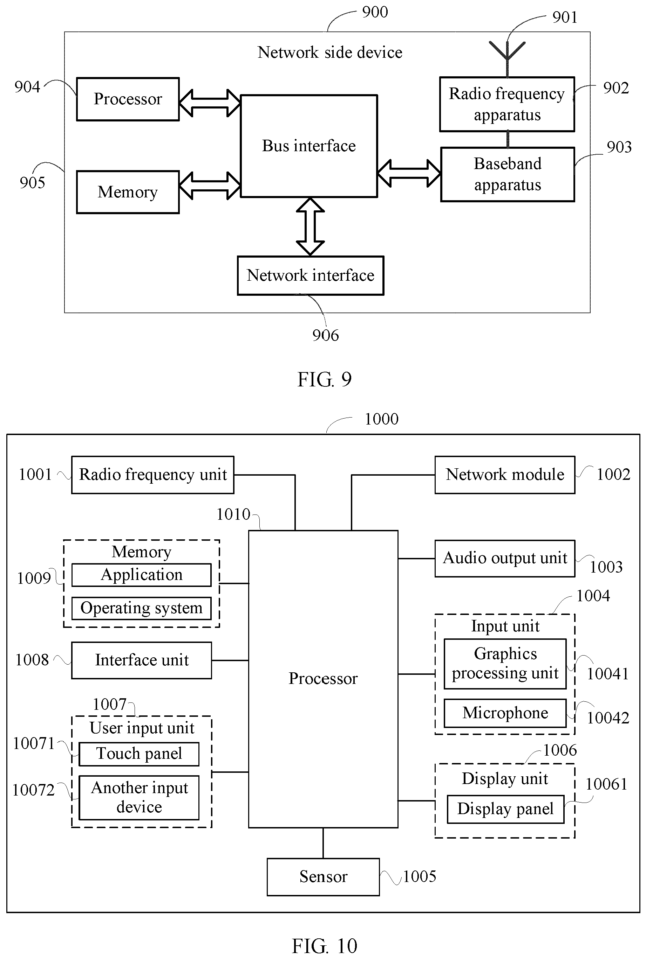

Specifically, an embodiment of this application further provides a network side device. As shown in FIG. 9, a network device 900 includes an antenna 901, a radio frequency apparatus 902, and a baseband apparatus 903. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes to-be-sent information, and sends the information to the radio frequency apparatus 902. The radio frequency apparatus 902 processes the received information and then sends the information by using the antenna 901.

The frequency band processing apparatus may be located in the baseband apparatus 903. The method performed by the network side device in the foregoing embodiment may be implemented in the baseband apparatus 903. The baseband apparatus 903 includes a processor 904 and a memory 905.

The baseband apparatus 903 may include, for example, at least one baseband board, where a plurality of chips are disposed on the baseband board. As shown in FIG. 9, one chip is, for example, the processor 904, which is connected to the memory 905, so as to invoke a program in the memory 905 to perform operations of the network device shown in the foregoing method embodiment.

The baseband apparatus 903 may further include a network interface 906, configured to exchange information with the radio frequency apparatus 902. For example, the interface is a common public radio interface (common public radio interface, CPRI for short).

Specifically, the network side device in this embodiment of the present invention further includes an instruction or a program that is stored in the memory 905 and that can be run on the processor 904. The processor 904 invokes the instruction or the program in the memory 905 to perform the specific steps in the method performed by the modules of the network device in the embodiments shown in FIG. 2 to FIG. 6, and a same technical effect is achieved. To avoid repetition, details are not described herein again.

FIG. 10 is a schematic structural diagram of hardware of a terminal device according to an embodiment of this application.

A terminal device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal device 1000 may further include a power supply (such as a battery) that supplies power to each component. The power supply may be logically connected to the processor 1010 by using a power supply management system, to implement functions such as charging and discharging management, and power consumption management by using the power supply management system. The structure of the terminal device shown in FIG. 10 does not constitute a limitation on the terminal device. The terminal device may include components more or fewer than those shown in the diagram, a combination of some components, or different component arrangements. Details are not described herein.

It should be understood that, in this embodiment of this application, the input unit 1004 may include a graphics processing unit (Graphics Processing Unit, GPU) 10041 and a microphone 10042, and the graphics processing unit 10041 processes image data of a still picture or a video obtained by an image capture apparatus (such as a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, the radio frequency unit 1001 receives downlink data from a network side device and then sends the downlink data to the processor 1010 for processing; and sends uplink data to the network side device. Usually, the radio frequency unit 1001 includes but is not limited to an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area. The program or instruction storage area may store an operating system, and an application or an instruction required by at least one function (for example, a sound playing function or an image playing function). In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1010 may include one or more processing units. Optionally, an application processor and a modem processor may be integrated into the processor 1010. The application processor mainly processes an operating system, a user interface, an application, an instruction, or the like. The modem processor mainly processes wireless communications, for example, a baseband processor. It can be understood that, alternatively, the modem processor may not be integrated into the processor 1010.

The processor 1010 is configured to: determine a target network function sending target service data to a first terminal; and send a transfer indication to a second terminal, where the transfer indication is used by the second terminal to receive the target service data sent by the target network function.

In an implementation, the processor 1010 is configured to: receive a service transfer request sent by a requesting terminal, where the service transfer request includes identifier information of a requested terminal, and the requested terminal is a terminal other than the requesting terminal in the first terminal and the second terminal; and determine, according to the identifier information of the requested terminal, the target network function sending the target service data to the first terminal.

In an implementation, the processor 1010 is configured to: after the target network function sending the target service data to the first terminal is determined, send the target service data to the second terminal by using the target network function, where the target network function includes at least one of a PDN GW, an SMF, and a UPF.

In an implementation, the service transfer request further includes an inter-terminal transfer indication, and the inter-terminal transfer indication is used to represent that a terminal requests to transfer the target service data between the first terminal and the second terminal.

In an implementation, the processor 1010 is configured to: send the target service data to a second connection between the second device and the target network function based on the inter-terminal transfer indication by using the target network function; or send the target service data to a first connection and a second connection based on the inter-terminal transfer indication by using the target network function, where the first connection is a connection between the first terminal and the target network function, and the second connection is a connection between the second device and the target network function.

In an implementation, in a case that a second connection is established between the second terminal and the network device, the transfer indication is a second connection modification message, and the second connection modification message is used to modify a second connection rule of the second connection, so that the second terminal receives the target service data sent by the target network function; in a case that no second connection is established between the second terminal and the network device, the transfer indication is a second connection establishment message, and the second connection establishment message is used to establish a second connection between the second terminal and the target network function; and in a case that a requesting terminal is the second terminal, the transfer indication is included in a service transfer response message sent to the second terminal, or the transfer indication is a service transfer response message sent to the second terminal.

In an implementation, the processor 1010 is configured to: send a first connection release message to the first terminal in a case that a device receiving the target service data is changed to only the second terminal, where the first connection release message is used to release a first connection between the first terminal and the network device; or send a first connection modification message to the first terminal, where the first connection modification message is used to modify a first connection rule of the first connection, to stop the target network function from sending data to the first terminal.

In an implementation, in a case that a requesting terminal is the first terminal, the first connection release message or the first connection modification message is a service transfer response message sent to the first terminal.

In an implementation, the service transfer request further includes at least one of the following content: a data network name corresponding to a first connection obtained from the first terminal, a slice corresponding to the first connection obtained from the first terminal, and a mapped slice identifier corresponding to the first connection obtained from the first terminal.

In an implementation, the processor 1010 is configured to send a target parameter to the target network function after the target network function is determined, where the target parameter includes at least one of the following parameters: an identifier of the second terminal, an identifier of a second connection, a second flow identifier, an IP address and a port number that are allocated by a network to the second terminal, a first target routing rule, and a second target routing rule, where the first target routing rule includes a first packet filter and a first downlink routing rule, and the first downlink routing rule includes at least one of a first device identifier, an identifier of a first connection, and a first flow identifier; and the second target routing rule includes a second packet filter and a second downlink routing rule, and the second downlink routing rule includes at least one of a second device identifier, the identifier of the second connection, and the second flow identifier.

In an implementation, the identifier information of the requested terminal includes at least one of the following identifiers: an identifier of the requested terminal, a connection identifier, and a flow identifier, where the connection identifier is an identifier of a connection between the requested terminal and the network device.

In an implementation, the service transfer request further includes a transfer type identifier, and the transfer type identifier is used to represent that a device receiving the target service data is changed to the second terminal or is changed to the first terminal and the second terminal.

In an implementation, the processor 1010 is configured to: before the service transfer request sent by the requesting terminal is received, determine whether the first terminal and the second terminal are terminals that have a capability of obtaining an inter-terminal service transfer service.

In an implementation, the processor 1010 is configured to: before the determining whether the first terminal and the second terminal are terminals that have a capability of obtaining an inter-terminal service transfer service, receive a mobility management request message sent by the requesting terminal, where the mobility management request message includes a first indication identifier used to request to obtain an inter-terminal service transfer service and/or a second indication identifier used to represent that an inter-terminal service transfer service capability is supported; and send a mobility management response to the requesting terminal, where the mobility management response includes: network signaling used to represent that a network allows the requesting terminal to obtain an inter-terminal service transfer service capability.

In an implementation, the mobility management request message further includes a terminal identifier of the requested terminal.

In an implementation, the processor 1010 is configured to send a network capability indication to the requesting terminal before the service transfer request sent by the requesting terminal is received, where the network capability indication is used to indicate whether the network device supports an inter-terminal service transfer service capability.

In an implementation, the processor 1010 is configured to: in a case that it is determined that the first terminal and the second terminal are terminals that have a capability of obtaining an inter-terminal service transfer service, change, according to the service transfer request, the device receiving the target service data from the first terminal to the second terminal.

The terminal device 1000 in this embodiment of the present invention may correspond to the procedures of the second terminal in the methods 200 to 600 in the embodiments of the present invention, and the units/modules in the terminal device 1000 and the foregoing operations and/or functions are respectively for implementing the procedures of the second terminal in the methods 200 to 600 and a same or similar technical effect can be achieved. For brevity, details are not described herein again.

An embodiment of this application further provides a readable storage medium, not according to the invention as claimed. The readable storage medium stores a program or an instruction, and when the program or the instruction is executed by a processor, the processes of the foregoing service data transmission method embodiment are implemented and a same technical effect can be achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, not according to the invention as claimed. The chip includes a processor and a communications interface, the communications interface is coupled to the processor, and the processor is configured to run a program or an instruction to implement the processes of the foregoing service data transmission method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product, not according to the invention as claimed.
The computer program product includes a processor, a memory, and a program or an instruction that is stored in the memory and that can be run on the processor, where when the program or the instruction is executed by the processor, the steps of the method in the first aspect are implemented.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings.

## Claims

1. A service data transmission method, wherein the method is performed by a second terminal, and the method comprises:
receiving a transfer indication sent by a network device; and
receiving, according to the transfer indication, target service data sent by a target network function, wherein the target network function is a network function sending service data to a first terminal;
the method being **characterized by**:
before the receiving a transfer indication sent by a network device, the method further comprises:
sending a service transfer request to the network device, wherein the service transfer request is used to request that a device receiving the target service data is changed from the first terminal to the second terminal, and the service transfer request comprises identifier information of the first terminal;
wherein the receiving the transfer indication sent by the network device comprises:
receiving a service transfer response message sent by the network device, wherein the transfer indication is comprised in the service transfer response message.

2. The method according to claim 1, wherein the service transfer request further comprises an inter-terminal transfer indication, and the inter-terminal transfer indication is used to represent that a terminal requests to transfer the target service data between the first terminal and the second terminal;
or,
the service transfer request further comprises a transfer type identifier, and the transfer type identifier is used to represent that a device receiving the target service data is changed to the second terminal or is changed to the first terminal and the second terminal.

3. The method according to claim 1, wherein in a case that a second connection is established between the second terminal and the network device, the transfer indication is a second connection modification message, and the second connection modification message is used to modify a second connection rule of the second connection, so that the second terminal receives the target service data sent by the target network function; and
in a case that no second connection is established between the second terminal and the network device, the transfer indication is a second connection establishment message, and the second connection establishment message is used to establish a second connection between the second terminal and the target network function.

4. The method according to claim 3, wherein the service transfer request further comprises at least one of the following content:
a data network name corresponding to a first connection obtained from the first terminal;
a slice corresponding to the first connection obtained from the first terminal; and
a mapped slice identifier corresponding to the first connection obtained from the first terminal.

5. The method according to claim 1, wherein the first terminal and the second terminal are terminals that have a capability of obtaining an inter-terminal service transfer service;
wherein before the sending a service transfer request to the network device, the method further comprises:
requesting authorization from a network, so that the first terminal and the second terminal obtain an inter-terminal service transfer service capability;
wherein the requesting authorization from a network, so that the first terminal and the second terminal obtain an inter-terminal service transfer service capability comprises:
sending a mobility management request message to the network device, wherein the mobility management request message comprises a first indication identifier used to request to obtain an inter-terminal service transfer service and/or a second indication identifier used to represent that an inter-terminal service transfer service capability is supported; and
receiving a mobility management response sent by the network, wherein the mobility management response comprises network signaling used to represent that the network allows the second terminal to obtain an inter-terminal service transfer service capability.

6. The method according to claim 1, wherein before the sending a service transfer request to the network device, the method further comprises:
receiving a network capability indication sent by the network device, wherein the network capability indication is used to indicate that the network device supports an inter-terminal service transfer service capability.

7. A service data transmission method, wherein the method is performed by a network device, and the method comprises:
determining a target network function sending target service data to a first terminal; and
sending a transfer indication to a second terminal, wherein the transfer indication is used by the second terminal to receive the target service data sent by the target network function; the method being **characterized by**:
the determining the target network function sending target service data to the first terminal comprising:
receiving a service transfer request sent by the second terminal, wherein the service transfer request comprises identifier information of the first terminal; and
determining, according to the identifier information of the first terminal, the target network function sending the target service data to the first terminal;
wherein the sending the transfer indication to the second terminal comprises:
sending a service transfer response message to the second terminal, wherein the transfer indication is comprised in the service transfer response message.

8. The method according to claim 7,
wherein after the determining a target network function sending target service data to a first terminal, the method further comprises:
sending the target service data to the second terminal by using the target network function, wherein the target network function comprises at least one of a packet data network gateway PDN GW, a session management function SMF, and a user plane function UPF.

9. The method according to claim 8, wherein the service transfer request further comprises:
an inter-terminal transfer indication, wherein the inter-terminal transfer indication is used to represent that a terminal requests to transfer the target service data between the first terminal and the second terminal;
wherein the sending the target service data to the second terminal by using the target network function comprises:
sending the target service data to a second connection between the second device and the target network function based on the inter-terminal transfer indication by using the target network function; or
sending the target service data to a first connection and a second connection based on the inter-terminal transfer indication by using the target network function, wherein the first connection is a connection between the first terminal and the target network function, and the second connection is a connection between the second device and the target network function.

10. The method according to claim 7, wherein in a case that a second connection is established between the second terminal and the network device, the transfer indication is a second connection modification message, and the second connection modification message is used to modify a second connection rule of the second connection, so that the second terminal receives the target service data sent by the target network function;
in a case that no second connection is established between the second terminal and the network device, the transfer indication is a second connection establishment message, and the second connection establishment message is used to establish a second connection between the second terminal and the target network function.

11. The method according to claim 7, wherein in a case that a device receiving the target service data is changed to only the second terminal, the method further comprises:
sending a first connection release message to the first terminal, wherein the first connection release message is used to release a first connection between the first terminal and the network device; or
sending a first connection modification message to the first terminal, wherein the first connection modification message is used to modify a first connection rule of the first connection, to stop the target network function from sending data to the first terminal.

12. The method according to claim 7, wherein after the target network function is determined, the method further comprises:
sending a target parameter to the target network function, wherein the target parameter comprises at least one of the following parameters:
an identifier of the second terminal, an identifier of a second connection, a second flow identifier, an IP address and a port number that are allocated by a network to the second terminal, a first target routing rule, and a second target routing rule, wherein
the first target routing rule comprises a first packet filter and a first downlink routing rule, and the first downlink routing rule comprises at least one of a first device identifier, an identifier of a first connection, and a first flow identifier; and the second target routing rule comprises a second packet filter and a second downlink routing rule, and the second downlink routing rule comprises at least one of a second device identifier, the identifier of the second connection, and the second flow identifier.

13. The method according to claim 9, wherein before the receiving a service transfer request sent by the second terminal, the method further comprises:
determining whether the first terminal and the second terminal are terminals that have a capability of obtaining an inter-terminal service transfer service;
wherein before the determining whether the first terminal and the second terminal are terminals that have a capability of obtaining an inter-terminal service transfer service, the method further comprises:
receiving a mobility management request message sent by the second terminal, wherein the mobility management request message comprises a first indication identifier used to request to obtain an inter-terminal service transfer service and/or a second indication identifier used to represent that an inter-terminal service transfer service capability is supported; and
sending a mobility management response to the second terminal, wherein the mobility management response comprises:
network signaling used to represent that a network allows the second terminal to obtain an inter-terminal service transfer service capability;
wherein the mobility management request message further comprises a terminal identifier of the first terminal;
that a device receiving the target service data is changed from the first terminal to the second terminal changing according to the service transfer request comprises: in a case that it is determined that the first terminal and the second terminal are terminals that have a capability of obtaining an inter-terminal service transfer service, changing, according to the service transfer request, the device receiving the target service data from the first terminal to the second terminal.

14. A service data transmission apparatus for a second terminal, comprising:
a first receiving module, configured to receive a transfer indication sent by a network device; and
a processing module, configured to process, according to the transfer indication, target service data sent by a target network function, wherein the target network function is a network function sending service data to a first terminal;
wherein the apparatus is **characterized by** further comprising: a first sending module, configured to send a service transfer request to the network device before receiving the transfer indication sent by the network device, wherein the service transfer request is used to request that a device receiving the target service data is changed from the first terminal to the second terminal, and the service transfer request includes identifier information of the first terminal; and
the first receiving module is further configured to receive a service transfer response message sent by the network device, wherein the transfer indication is comprised in the service transfer response message.

15. A service data transmission apparatus for a network device, comprising:
a determining module, configured to determine a target network function sending target service data to a first terminal; and
a second sending module, configured to send a transfer indication to a second terminal, wherein the transfer indication is used by the second terminal to receive the target service data sent by the target network function;
wherein the apparatus is **characterized by** further comprising: a second receiving module, configured to receive a service transfer request sent by the second terminal, where the service transfer request comprises identifier information of the first terminal;
the determining module is configured to determine, according to the identifier information of the first terminal, the target network function sending the target service data to the first terminal;
the second sending module is configured to send a service transfer response message to the second terminal, wherein the transfer indication is comprised in the service transfer response message.

## Patentansprüche

1. Dienstdatenübertragungsverfahren, wobei das Verfahren von einem zweiten Endgerät durchgeführt wird und das Verfahren Folgendes umfasst:
Empfangen einer Übertragungsangabe, die von einer Netzvorrichtung gesendet wird; und
Empfangen von Zieldienstdaten, die von einer Zielnetzfunktion gesendet werden, gemäß der Übertragungsangabe, wobei die Zielnetzfunktion eine Netzfunktion ist, die Dienstdaten an ein erstes Endgerät sendet;
wobei das Verfahren **dadurch gekennzeichnet ist, dass**:
das Verfahren vor dem Empfangen einer von einer Netzvorrichtung gesendeten Übertragungsangabe ferner Folgendes umfasst:
Senden einer Dienstübertragungsanforderung an die Netzvorrichtung, wobei die Dienstübertragungsanforderung verwendet wird, um anzufordern, dass eine Vorrichtung, die die Zieldienstdaten empfängt, von dem ersten Endgerät zu dem zweiten Endgerät gewechselt wird, und die Dienstübertragungsanforderung Identifizierungsinformationen des ersten Endgeräts umfasst;
wobei das Empfangen der von der Netzvorrichtung gesendeten Übertragungsangabe Folgendes umfasst: Empfangen einer von der Netzvorrichtung gesendeten Dienstübertragungsantwortnachricht, wobei die Übertragungsangabe in der Dienstübertragungsantwortnachricht enthalten ist.

2. Verfahren nach Anspruch 1, wobei die Dienstübertragungsanforderung ferner eine Übertragungsangabe zwischen Endgeräten umfasst und die Übertragungsangabe zwischen Endgeräten verwendet wird, um darzustellen, dass ein Endgerät anfordert, die Zieldienstdaten zwischen dem ersten Endgerät und dem zweiten Endgerät zu übertragen;
oder
die Dienstübertragungsanforderung ferner eine Übertragungstypkennung umfasst und die Übertragungstypkennung verwendet wird, um darzustellen, dass eine Vorrichtung, die die Zieldienstdaten empfängt, zu dem zweiten Endgerät gewechselt wird oder zu dem ersten Endgerät und dem zweiten Endgerät gewechselt wird.

3. Verfahren nach Anspruch 1, wobei in einem Fall, in dem eine zweite Verbindung zwischen dem zweiten Endgerät und der Netzvorrichtung hergestellt wird, die Übertragungsangabe eine zweite Verbindungsmodifikationsnachricht ist und die zweite Verbindungsmodifikationsnachricht verwendet wird, um eine zweite Verbindungsregel der zweiten Verbindung zu modifizieren, sodass das zweite Endgerät die Zieldienstdaten empfängt, die von der Zielnetzfunktion gesendet werden; und
in einem Fall, in dem keine zweite Verbindung zwischen dem zweiten Endgerät und der Netzvorrichtung hergestellt wird, die Übertragungsangabe eine zweite Verbindungsaufbaumeldung ist und die zweite Verbindungsaufbaumeldung verwendet wird, um eine zweite Verbindung zwischen dem zweiten Endgerät und der Zielnetzfunktion herzustellen.

4. Verfahren nach Anspruch 3, wobei die Dienstübertragungsanforderung ferner mindestens einen der folgenden Inhalte umfasst:
einen Datennetznamen, der einer ersten Verbindung entspricht, die von dem ersten Endgerät erlangt wird;
eine Schicht, die der ersten Verbindung entspricht, die von dem ersten Endgerät erlangt wird; und
eine gemappte Schichtkennung, die der ersten Verbindung entspricht, die von dem ersten Endgerät erlangt wird.

5. Verfahren nach Anspruch 1, wobei es das erste und das zweite Endgerät Endgeräte sind, die eine Fähigkeit aufweisen, einen Dienstübertragungsdienst zwischen Endgeräten zu erlangen;
wobei das Verfahren vor dem Senden einer Dienstübertragungsanforderung an die Netzvorrichtung ferner Folgendes umfasst:
Anfordern einer Autorisierung von einem Netz, sodass das erste Endgerät und das zweite Endgerät eine Dienstübertragungsdienstfähigkeit zwischen Endgeräten erlangen;
wobei das Anfordern einer Autorisierung von einem Netzwerk, sodass das erste Endgerät und das zweite Endgerät eine Dienstübertragungsdienstfähigkeit zwischen Endgeräten erlangen, Folgendes umfasst:
Senden einer Mobilitätsmanagement-Anforderungsnachricht an die Netzvorrichtung, wobei die Mobilitätsmanagement-Anforderungsnachricht eine erste Angabekennung umfasst, die verwendet wird, um anzufordern, einen Dienstübertragungsdienst zwischen Endgeräten zu erlangen, und/oder eine zweite Angabekennung, die verwendet wird, um darzustellen, dass eine Dienstübertragungsdienstfähigkeit zwischen Endgeräten unterstützt wird; und
Empfangen einer von dem Netz gesendeten Mobilitätsmanagement-Antwort, wobei die Mobilitätsmanagement-Antwort Netzsignalisierung umfasst, die verwendet wird, um darzustellen, dass das Netz dem zweiten Endgerät erlaubt, eine Dienstübertragungsdienstfähigkeit zwischen Endgeräten zu erlangen.

6. Verfahren nach Anspruch 1, wobei das Verfahren vor dem Senden einer Dienstübertragungsanforderung an die Netzvorrichtung ferner Folgendes umfasst:
Empfangen einer von der Netzvorrichtung gesendeten Netzfähigkeitsangabe, wobei die Netzfähigkeitsangabe verwendet wird, um anzugeben, dass die Netzvorrichtung eine Dienstübertragungsdienstfähigkeit zwischen Endgeräten unterstützt.

7. Dienstdatenübertragungsverfahren, wobei das Verfahren von einer Netzvorrichtung durchgeführt wird und das Verfahren Folgendes umfasst:
Bestimmen einer Zieldienstfunktion, die Zieldienstdaten an ein erstes Endgerät sendet; und
Senden einer Übertragungsangabe an ein zweites Endgerät, wobei die Übertragungsangabe von dem zweiten Endgerät verwendet wird, um die von der Zielnetzfunktion gesendeten Zieldienstdaten zu empfangen, wobei das Verfahren **dadurch gekennzeichnet ist, dass**:
das Bestimmen der Zielnetzfunktion, die Zieldienstdaten an das erste Endgerät sendet, Folgendes umfasst:
Empfangen einer Dienstübertragungsanforderung, die von dem zweiten Endgerät gesendet wird, wobei die Dienstübertragungsanforderung Identifizierungsinformationen des ersten Endgeräts umfasst; und
Bestimmen, gemäß den Kennungsinformationen des ersten Endgeräts, der Zielnetzfunktion, die die Zieldienstdaten an das erste Endgerät sendet;
wobei das Senden der Übertragungsangabe an das zweite Endgerät Folgendes umfasst:
Senden einer Dienstübertragungsantwortnachricht an das zweite Endgerät, wobei die Übertragungsangabe in der Dienstübertragungsantwortnachricht enthalten ist.

8. Verfahren nach Anspruch 7,
wobei das Verfahren nach dem Bestimmen einer Zielnetzfunktion, die Zieldienstdaten an ein erstes Endgerät sendet, Folgendes umfasst:
Senden der Zieldienstdaten an das zweite Endgerät unter Verwendung der Zielnetzfunktion, wobei die Zielnetzfunktion mindestens eines von einem Paketdatennetz-Gateway, PDN GW, einer Sitzungsmanagementfunktion, SMF, und einer Benutzerebenenfunktion, UPE, umfasst

9. Verfahren nach Anspruch 8, wobei die Dienstübertragungsanforderung ferner Folgendes umfasst:
eine Übertragungsangabe zwischen Endgeräten, wobei die Übertragungsangabe zwischen Endgeräten verwendet wird, um darzustellen, dass ein Endgerät anfordert, die Zieldienstdaten zwischen dem ersten Endgerät und dem zweiten Endgerät zu übertragen;
wobei das Senden der Zieldienstdaten an das zweite Endgerät unter Verwendung der Zielnetzfunktion Folgendes umfasst:
Senden der Zieldienstdaten an eine zweite Verbindung zwischen der zweiten Vorrichtung und der Zielnetzfunktion basierend auf der Übertragungsangabe zwischen Endgeräten unter Verwendung der Zielnetzfunktion; oder
Senden der Zieldienstdaten an eine erste Verbindung und eine zweite Verbindung basierend auf der Übertragungsangabe zwischen Endgeräten unter Verwendung der Zielnetzfunktion, wobei die erste Verbindung eine Verbindung zwischen dem ersten Endgerät und der Zielnetzfunktion ist und die zweite Verbindung eine Verbindung zwischen der zweiten Vorrichtung und der Zielnetzfunktion ist.

10. Verfahren nach Anspruch 7, wobei in einem Fall, in dem eine zweite Verbindung zwischen dem zweiten Endgerät und der Netzvorrichtung hergestellt wird, die Übertragungsangabe eine zweite Verbindungsmodifikationsnachricht ist und die zweite Verbindungsmodifikationsnachricht verwendet wird, um eine zweite Verbindungsregel der zweiten Verbindung zu modifizieren, sodass das zweite Endgerät die Zieldienstdaten empfängt, die von der Zielnetzfunktion gesendet werden;
in einem Fall, in dem keine zweite Verbindung zwischen dem zweiten Endgerät und der Netzvorrichtung hergestellt wird, die Übertragungsangabe eine zweite Verbindungsaufbaumeldung ist und die zweite Verbindungsaufbaumeldung verwendet wird, um eine zweite Verbindung zwischen dem zweiten Endgerät und der Zielnetzfunktion herzustellen.

11. Verfahren nach Anspruch 7, wobei in einem Fall, in dem eine Vorrichtung, die die Zieldienstdaten empfängt, nur auf das zweite Endgerät geändert wird, das Verfahren ferner Folgendes umfasst:
Senden einer ersten Verbindungsfreigabenachricht an das erste Endgerät, wobei die erste Verbindungsfreigabenachricht verwendet wird, um eine erste Verbindung zwischen dem ersten Endgerät und der Netzvorrichtung freizugeben; oder
Senden einer ersten Verbindungsänderungsnachricht an das erste Endgerät, wobei die erste Verbindungsänderungsnachricht verwendet wird, um eine erste Verbindungsregel der ersten Verbindung zu ändern, um die Zielnetzfunktion daran zu hindern, Daten an das erste Endgerät zu senden.

12. Verfahren nach Anspruch 7, wobei das Verfahren, nach Bestimmen der Zielnetzfunktion ferner Folgendes umfasst:
Senden eines Zielparameters an die Zielnetzfunktion, wobei der Zielparameter mindestens einen der folgenden Parameter umfasst:
eine Kennung des zweiten Endgeräts, eine Kennung einer zweiten Verbindung, eine zweite Flusskennung, eine IP-Adresse und eine Portnummer, die dem zweiten Endgerät von einem Netzwerk zugewiesen werden, eine erste Ziel-Weiterleitungsregel und eine zweite Ziel-Weiterleitungsregel, wobei
wobei die erste Ziel-Weiterleitungsregel einen ersten Paketfilter und eine erste Downlink-Weiterleitungsregel umfasst, und die erste Downlink-Weiterleitungsregel mindestens eine von einer ersten Vorrichtungskennung, einer Kennung einer ersten Verbindung und einer ersten Flusskennung umfasst; und die zweite Ziel-Weiterleitungsregel einen zweiten Paketfilter und eine zweite Downlink-Weiterleitungsregel umfasst, und die zweite Downlink-Weiterleitungsregel mindestens eine von einer zweiten Vorrichtungskennung, der Kennung der zweiten Verbindung und der zweiten Flusskennung umfasst.

13. Verfahren nach Anspruch 9, wobei das Verfahren vor dem Empfangen einer von dem zweiten Endgerät gesendeten Dienstübertragungsanforderung ferner Folgendes umfasst:
Bestimmen, ob das erste und das zweite Endgerät Endgeräte sind, die die Fähigkeit aufweisen, einen Dienstübertragungsdienst zwischen Endgeräten zu erlangen;
wobei das Verfahren, bevor bestimmt wird, ob das erste Endgerät und das zweite Endgerät Endgeräte sind, die die Fähigkeit aufweisen, einen Dienstübertragungsdienst zwischen Endgeräten zu erlangen, ferner Folgendes umfasst:
Empfangen einer Mobilitätsmanagement-Anforderungsnachricht, die von dem zweiten Endgerät gesendet wird, wobei die Mobilitätsmanagement-Anforderungsnachricht eine erste Angabekennung umfasst, die verwendet wird, um anzufordern, einen Dienstübertragungsdienst zwischen Endgeräten zu erlangen, und/oder eine zweite Angabekennung, die verwendet wird, um darzustellen, dass eine Dienstübertragungsdienstfähigkeit zwischen Endgeräten unterstützt wird; und
Senden einer Mobilitätsmanagementantwort an das zweite Endgerät, wobei die Mobilitätsmanagementantwort Folgendes umfasst:
Netzsignalisierung, die verwendet wird, um darzustellen, dass ein Netz dem zweiten Endgerät erlaubt, eine Dienstübertragungsfähigkeit zwischen den Endgeräts zu erlangen;
wobei die Mobilitätsmanagement-Anforderungsnachricht ferner eine Endgerätkennung des ersten Endgeräts umfasst;
dass eine Vorrichtung, die die Zieldienstdaten empfängt, von dem ersten Endgerät zu dem zweiten Endgerät geändert wird, wobei das Ändern gemäß der Dienstübertragungsanforderung Folgendes umfasst: in einem Fall, in dem bestimmt wird, dass das erste Endgerät und das zweite Endgerät Endgeräte sind, die die Fähigkeit aufweisen, einen Dienstübertragungsdienst zwischen Endgeräten zu erlangen, Ändern, gemäß der Dienstübertragungsanforderung, der Vorrichtung, die die Zieldienstdaten empfängt, von dem ersten Endgerät zu dem zweiten Endgerät.

14. Dienstdatenübertragungsvorrichtung für ein zweites Endgerät, umfassend:
ein erstes Empfangsmodul, das konfiguriert ist, um eine Übertragungsangabe zu empfangen, die von einer Netzvorrichtung gesendet wird; und
ein Verarbeitungsmodul, das konfiguriert ist, um gemäß der Übertragungsangabe Zieldienstdaten zu verarbeiten, die von einer Zielnetzfunktion gesendet werden, wobei die Zielnetzfunktion eine Netzfunktion ist, die Dienstdaten an ein erstes Endgerät sendet;
wobei die Vorrichtung **dadurch gekennzeichnet ist, dass** sie ferner Folgendes umfasst:
ein erstes Sendemodul, das konfiguriert ist,
um eine Dienstübertragungsanforderung an die Netzvorrichtung zu senden, bevor die von der Netzvorrichtung gesendete Übertragungsangabe empfangen wird, wobei die Dienstübertragungsanforderung verwendet wird, um anzufordern, dass eine Vorrichtung, die die Zieldienstdaten empfängt, von dem ersten Endgerät zu dem zweiten Endgerät geändert wird, und die Dienstübertragungsanforderung Identifizierungsinformationen des ersten Endgeräts beinhaltet; und
das erste Empfangsmodul ferner konfiguriert ist, um eine von der Netzvorrichtung gesendete Dienstübertragungsantwortnachricht zu empfangen, wobei die Übertragungsangabe in der Dienstübertragungsantwortnachricht enthalten ist.

15. Dienstdatenübertragungsvorrichtung für eine Netzvorrichtung, umfassend:
ein Bestimmungsmodul, das konfiguriert ist, um eine Zieldienstfunktion zu bestimmen, die Zieldienstdaten an ein erstes Endgerät sendet; und
ein zweites Sendemodul, das konfiguriert ist, um eine Übertragungsangabe an ein zweites Endgerät zu senden, wobei die Übertragungsangabe von dem zweiten Endgerät verwendet wird, um die Zieldienstdaten zu empfangen, die von der Zielnetzfunktion gesendet werden;
wobei die Vorrichtung **dadurch gekennzeichnet ist, dass** sie ferner Folgendes umfasst:
ein zweites Empfangsmodul, das konfiguriert ist,
um eine von dem zweiten Endgerät gesendete Dienstübertragungsanforderung zu empfangen, wobei die Dienstübertragungsanforderung Identifizierungsinformationen des ersten Endgeräts umfasst;
das Bestimmungsmodul konfiguriert ist, um gemäß den Identifizierungsinformation des ersten Endgeräts die Zielnetzfunktion zu bestimmen, die die Zieldienstdaten an das erste Endgerät sendet;
das zweite Sendemodul konfiguriert ist, um eine Dienstübertragungsantwortnachricht an das zweite Endgerät zu senden, wobei die Übertragungsangabe in der Dienstübertragungsantwortnachricht enthalten ist.

## Revendications

1. Procédé de transmission de données de service, dans lequel le procédé est exécuté par un second terminal, et le procédé comprend :
la réception d'une indication de transfert envoyée par un dispositif de réseau ; et
la réception, en fonction de l'indication de transfert, de données de service cibles envoyées par une fonction de réseau cible, dans lequel la fonction de réseau cible est une fonction de réseau envoyant des données de service à un premier terminal ;
le procédé étant **caractérisé en ce que** :
avant la réception d'une indication de transfert envoyée par un dispositif de réseau, le procédé comprend en outre :
l'envoi d'une demande de transfert de service au dispositif de réseau, dans lequel la demande de transfert de service est utilisée pour demander qu'un dispositif recevant les données de service cibles passe du premier terminal au second terminal, et la demande de transfert de service comprend des informations d'identification du premier terminal ;
dans lequel la réception de l'indication de transfert envoyée par le dispositif de réseau comprend :
la réception d'un message de réponse de transfert de service envoyé par le dispositif de réseau, dans lequel l'indication de transfert est comprise dans le message de réponse de transfert de service.

2. Procédé selon la revendication 1, dans lequel la demande de transfert de service comprend en outre une indication de transfert entre terminaux, et l'indication de transfert entre terminaux est utilisée pour indiquer qu'un terminal demande à transférer les données de service cibles entre le premier terminal et le second terminal ;
ou,
la demande de transfert de service comprend en outre un identificateur de type de transfert, et l'identificateur de type de transfert est utilisé pour indiquer qu'un dispositif recevant les données de service cibles est remplacé par le second terminal ou par le premier terminal et le second terminal.

3. Procédé selon la revendication 1, dans lequel, dans un cas où une seconde connexion est établie entre le second terminal et le dispositif de réseau, l'indication de transfert est un second message de modification de connexion, et le second message de modification de connexion est utilisé pour modifier une seconde règle de connexion de la seconde connexion, de sorte que le second terminal reçoit les données de service cibles envoyées par la fonction de réseau cible ; et
dans un cas où aucune seconde connexion n'est établie entre le second terminal et le dispositif de réseau, l'indication de transfert est un second message d'établissement de connexion, et le second message d'établissement de connexion est utilisé pour établir une seconde connexion entre le second terminal et la fonction de réseau cible.

4. Procédé selon la revendication 3, dans lequel la demande de transfert de service comprend en outre au moins l'un des contenus suivants :
un nom de réseau de données correspondant à une première connexion obtenue à partir du premier terminal ;
une tranche correspondant à la première connexion obtenue du premier terminal ; et
un identificateur de tranche mappée correspondant à la première connexion obtenue à partir du premier terminal.

5. Procédé selon la revendication 1, dans lequel le premier terminal et le second terminal sont des terminaux qui ont la capacité d'obtenir un service de transfert de service entre terminaux ;
dans lequel, avant l'envoi d'une demande de transfert de service au dispositif de réseau, le procédé comprend en outre :
la demande d'une autorisation à un réseau, de sorte que le premier terminal et le second terminal obtiennent une capacité de service de transfert de service entre terminaux ;
dans lequel la demande d'autorisation auprès d'un réseau, afin que le premier terminal et le second terminal obtiennent une capacité de service de transfert de service entre terminaux comprend :
l'envoi d'un message de demande de gestion de mobilité au dispositif de réseau, dans lequel le message de demande de gestion de mobilité comprend un premier identificateur d'indication utilisé pour demander l'obtention d'un service de transfert de service entre terminaux et/ou un second identificateur d'indication utilisé pour indiquer qu'une capacité de service de transfert de service entre terminaux est prise en charge ; et
la réception d'une réponse de gestion de mobilité envoyée par le réseau, dans lequel la réponse de gestion de mobilité comprend une signalisation de réseau utilisée pour indiquer que le réseau autorise le second terminal à obtenir une capacité de service de transfert de service entre terminaux.

6. Procédé selon la revendication 1, dans lequel, avant l'envoi d'une demande de transfert de service au dispositif de réseau, le procédé comprend en outre :
la réception d'une indication de capacité de réseau envoyée par le dispositif de réseau, dans lequel l'indication de capacité de réseau est utilisée pour indiquer que le dispositif de réseau prend en charge une capacité de service de transfert de service entre terminaux.

7. Procédé de transmission de données de service, dans lequel le procédé est exécuté par un dispositif de réseau, et le procédé comprend :
la détermination d'une fonction de réseau cible envoyant des données de service cibles à un premier terminal ; et
l'envoi d'une indication de transfert à un second terminal, dans lequel l'indication de transfert est utilisée par le second terminal pour recevoir les données de service cibles envoyées par la fonction de réseau cible, le procédé étant **caractérisé par** :
la détermination de la fonction de réseau cible envoyant des données de service cibles au premier terminal comprenant :
la réception d'une demande de transfert de service envoyée par le second terminal, dans lequel la demande de transfert de service comprend des informations d'identification du premier terminal ; et
la détermination, en fonction des informations d'identification du premier terminal, de la fonction de réseau cible envoyant les données de service cibles au premier terminal ;
dans lequel l'envoi de l'indication de transfert au second terminal comprend :
l'envoi d'un message de réponse de transfert de service au second terminal, dans lequel l'indication de transfert est comprise dans le message de réponse de transfert de service.

8. Procédé selon la revendication 7,
dans lequel, après la détermination d'une fonction de réseau cible envoyant des données de service cibles à un premier terminal, le procédé comprend en outre :
l'envoi des données de service cibles au second terminal en utilisant la fonction de réseau cible, dans lequel la fonction de réseau cible comprend au moins l'une d'une passerelle de réseau de données par paquets PDN GW, d'une fonction de gestion de session SMF et d'une fonction de plan utilisateur UPE.

9. Procédé selon la revendication 8, dans lequel la demande de transfert de service comprend en outre :
une indication de transfert entre terminaux, dans lequel l'indication de transfert entre terminaux est utilisée pour indiquer qu'un terminal demande à transférer les données de service cibles entre le premier terminal et le second terminal ;
dans lequel l'envoi des données de service cibles au second terminal à l'aide de la fonction de réseau cible comprend :
l'envoi des données de service cibles à une seconde connexion entre le second dispositif et la fonction de réseau cible sur la base de l'indication de transfert entre terminaux en utilisant la fonction de réseau cible ; ou
l'envoi des données de service cibles à une première connexion et à une seconde connexion sur la base de l'indication de transfert entre terminaux en utilisant la fonction de réseau cible, dans lequel la première connexion est une connexion entre le premier terminal et la fonction de réseau cible, et la seconde connexion est une connexion entre le second dispositif et la fonction de réseau cible.

10. Procédé selon la revendication 7, dans lequel, dans un cas où une seconde connexion est établie entre le second terminal et le dispositif de réseau, l'indication de transfert est un message de modification de seconde connexion, et le message de modification de seconde connexion est utilisé pour modifier une seconde règle de connexion de la seconde connexion, de sorte que le second terminal reçoit les données de service cibles envoyées par la fonction de réseau cible ;
dans un cas où aucune seconde connexion n'est établie entre le second terminal et le dispositif de réseau, l'indication de transfert est un second message d'établissement de connexion, et le second message d'établissement de connexion est utilisé pour établir une seconde connexion entre le second terminal et la fonction de réseau cible.

11. Procédé selon la revendication 7, dans lequel, dans un cas où un dispositif recevant les données de service cibles est remplacé uniquement par le second terminal, le procédé comprend en outre :
l'envoi d'un message de libération de première connexion au premier terminal, dans lequel le message de libération de première connexion est utilisé pour libérer une première connexion entre le premier terminal et le dispositif de réseau ; ou
l'envoi d'un message de modification de première connexion au premier terminal, dans lequel le message de modification de première connexion est utilisé pour modifier une première règle de connexion de la première connexion, afin d'empêcher la fonction de réseau cible d'envoyer des données au premier terminal.

12. Procédé selon la revendication 7, dans lequel, après la détermination de la fonction de réseau cible, le procédé comprend en outre :
l'envoi d'un paramètre cible à la fonction de réseau cible, dans lequel le paramètre cible comprend au moins l'un des paramètres suivants :
un identificateur du second terminal, un identificateur d'une seconde connexion, un identificateur de second flux, une adresse IP et un numéro de port qui sont attribués par un réseau au second terminal, une première règle de routage cible et une seconde règle de routage cible, dans lequel
la première règle de routage cible comprend un premier filtre de paquets et une première règle de routage en liaison descendante, et la première règle de routage en liaison descendante comprend au moins l'un d'un identificateur de premier dispositif, d'un identificateur de première connexion et d'un identificateur de premier flux ; et la seconde règle de routage cible comprend un second filtre de paquets et une seconde règle de routage en liaison descendante, et la seconde règle de routage en liaison descendante comprend au moins l'un d'un identificateur de second dispositif, de l'identificateur de seconde connexion et de l'identificateur de second flux.

13. Procédé selon la revendication 9, dans lequel, avant la réception d'une demande de transfert de service envoyée par le second terminal, le procédé comprend en outre :
la détermination si le premier terminal et le second terminal sont des terminaux capables d'obtenir un service de transfert de service entre terminaux ;
dans lequel, avant de déterminer si le premier terminal et le second terminal sont des terminaux capables d'obtenir un service de transfert de service entre terminaux, le procédé comprend en outre :
la réception d'un message de demande de gestion de mobilité envoyé par le second terminal, dans lequel le message de demande de gestion de mobilité comprend un premier identificateur d'indication utilisé pour demander l'obtention d'un service de transfert de service entre terminaux et/ou un second identificateur d'indication utilisé pour indiquer qu'une capacité de service de transfert de service entre terminaux est prise en charge ; et
l'envoi d'une réponse de gestion de mobilité au second terminal, dans lequel la réponse de gestion de mobilité comprend :
une signalisation de réseau utilisée pour indiquer qu'un réseau permet au second terminal d'obtenir une capacité de service de transfert de service entre terminaux ;
dans lequel le message de demande de gestion de mobilité comprend en outre un identificateur de terminal du premier terminal ;
le passage d'un dispositif recevant les données de service cibles du premier terminal au second terminal en fonction de la demande de transfert de service comprend : dans un cas où il est déterminé que le premier terminal et le second terminal sont des terminaux capables d'obtenir un service de transfert de service entre terminaux, le passage, en fonction de la demande de transfert de service, du dispositif recevant les données de service cibles du premier terminal au second terminal.

14. Appareil de transmission de données de service pour un second terminal, comprenant :
un premier module de réception, configuré pour recevoir une indication de transfert envoyée par un dispositif de réseau ; et
un module de traitement, configuré pour traiter, en fonction de l'indication de transfert, des données de service cibles envoyées par une fonction de réseau cible, dans lequel la fonction de réseau cible est une fonction de réseau envoyant des données de service à un premier terminal ;
dans lequel l'appareil est **caractérisé en ce qu'**il comprend en outre :
un premier module d'envoi, configuré pour
envoyer une demande de transfert de service au dispositif de réseau avant de recevoir l'indication de transfert envoyée par le dispositif de réseau, dans lequel la demande de transfert de service est utilisée pour demander qu'un dispositif recevant les données de service cibles passe du premier terminal au second terminal, et la demande de transfert de service comprend des informations d'identification du premier terminal ; et
le premier module de réception est en outre configuré pour recevoir un message de réponse de transfert de service envoyé par le dispositif de réseau, dans lequel l'indication de transfert est comprise dans le message de réponse de transfert de service.

15. Appareil de transmission de données de service pour un dispositif de réseau, comprenant :
un module de détermination, configuré pour déterminer une fonction de réseau cible envoyant des données de service cibles à un premier terminal ; et
un second module d'envoi, configuré pour envoyer une indication de transfert à un second terminal, dans lequel l'indication de transfert est utilisée par le second terminal pour recevoir les données de service cibles envoyées par la fonction de réseau cible ;
dans lequel l'appareil est **caractérisé en ce qu'**il comprend en outre :
un second module de réception, configuré
pour recevoir une demande de transfert de service envoyée par le second terminal, où la demande de transfert de service comprend des informations d'identification du premier terminal ;
le module de détermination est configuré pour déterminer, en fonction des informations d'identification du premier terminal, la fonction de réseau cible envoyant les données de service cibles au premier terminal ;
le second module d'envoi est configuré pour envoyer un message de réponse de transfert de service au second terminal, dans lequel l'indication de transfert est comprise dans le message de réponse de transfert de service.
